# EUROPEAN PATENT SPECIFICATION

(11) **EP 0 766 014 B1**
(45) Date of publication and mention of the grant of the patent: **29.08.2001**
(21) Application number: 96306915.8
(22) Date of filing: 23.09.1996
(51) Int. Cl.: F16C 1/14

(54) **Bicycle with cable fixing plate**
Fahrrad mit Beilagscheibe
Bicyclette avec rondelle de fixation

(30) Priority: 26.09.1995 JP 27063195
(43) Date of publication of application: 02.04.1997
(73) Proprietor: SHIMANO INC., Osaka (JP)
(72) Inventor: Takahama, Kimitaka, Sakai-shi, Osaka (JP)
(74) Representative: Pacitti, Pierpaolo A.M.E.

(56) References cited:
- DE-B- 1 625 861
- DE-U- 8 225 363
- DK-C- 81 060
- GB-A- 2 123 037
- US-A- 3 744 012
- US-A- 4 135 777

## Description

The present invention is directed a bicycle comprising a bicycle cable fixing plate fixing a bicycle control cable as defined in the preamble of claim 1 as known by DE-U-8 225 363.

Bicycle control cables ordinarily comprise an inner cable which slides within an outer tubular casing. One end of the inner cable is usually fixed to a control device, and the other end of the cable is fixed to the device controlled. For example, the inner cable of a derailleur cable that drives a front derailleur may be fixed by a bolt to one of the pantograph links of the derailleur. The inner cable is usually held down and fixed by a washer-like cable fixing plate (also called a cable holding washer). However, when the inner cable is fixed by such a cable fixing plate, it may slip under powerful tension because of the lack of clamping force between the inner cable and the cable fixing plate. Known means for dealing with this problem are to provide protrusions to the cable fixing plate so that these protrusions will bite into the inner cable and secure it, or to provide V-grooves to the position on the right link where the inner cable is to be fixed. The cable must be positioned precisely for the protrusions or grooves to work effectively.

Consumer preferences demand that the bicycle be lightweight, and manufacturers attempt to satisfy this demand by using materials that are as strong and lightweight as possible. Aluminum alloys are frequently used for this purpose. However, if an aluminum alloy is used to make the cable fixing plate lighter, there is a pronounced tendency for the inner cable to slip as mentioned above. Also, since a conventional cable fixing plate rotates with the tightening force when the inner cable is being fixed by the bolt, it is usually integrally provided with a stopper or the like in order to prevent this rotation. In this case, care must be taken with the fixing direction of the cable fixing plate during assembly, which makes the assembly more complicated.

### SUMMARY OF THE INVENTION

The present invention is directed to a bicycle comprising a bicycle cable fixing plate fixing a bicycle control cable to a bicycle part with a powerful fastening force and without using rotation stoppers on the fixing plate, as set out in the second part of claim 1.

By forming the surface in this manner, the cable fixing plate of the bicycle of present invention securely fastens the control cable to the controlled device by means of a wedge effect produced by the convoluted bending of the cable. Substantially the same tightening force is obtained regardless of the rotational angular position of the cable fixing plate around the bolt. When the tension is increased on the cable, which bites into the protrusions and grooves, a restricting force that prevents slippage is generated quickly and exponentially. Furthermore, the contact surface area between the cable fixing plate and the cable is larger.

### BRIEF DESCRIPTION OF THE DRAWINGS

Figure 1 is a side view of a front derailleur which incorporates a particular embodiment of a cable fixing plate according to the present invention;
Figure 2 is a rear view of the derailleur shown in Figure 1;
Figure 3A is a front view of a particular embodiment of a cable fixing plate according to the present invention;
Figure 3B is a side view of the cable fixing plate shown in Figure 3A;
Figure 3C is a rear view of the cable fixing plate shown in Figure 3A;
Figure 4 is a front view of the cable fixing plate shown in Figure 3A illustrating various positions of a control cable;
Figure 5A is a front view of an alternative embodiment of a cable fixing plate according to the present invention;
Figure 5B is a side view of the cable fixing plate shown in Figure 5A;
Figure 5C is a rear view of the cable fixing plate shown in Figure 5A;
Figure 6A is a front view of another alternative embodiment of a cable fixing plate according to the present invention;
Figure 6B is a side view of the cable fixing plate shown in Figure 6A; and
Figure 6C is a rear view of the cable fixing plate shown in Figure 6A.

### DETAILED DESCRIPTION OF THE EMBODIMENTS

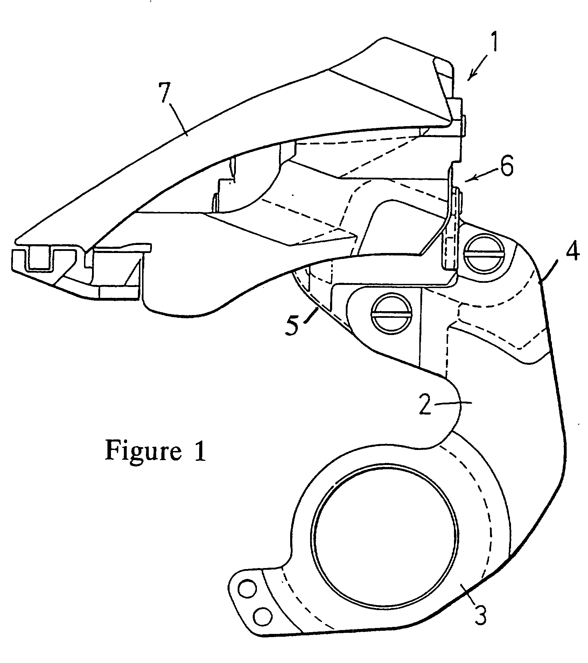

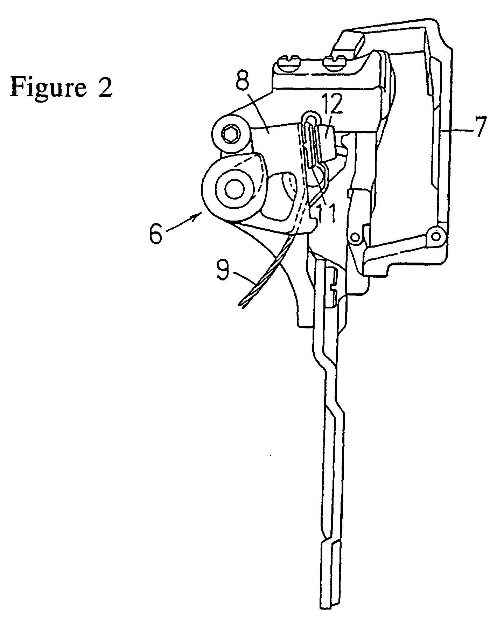

The present invention will be described using a front derailleur as an example. As shown in Figures 1 and 2, a front derailleur 1 is equipped with a seat tube bracket 2 which, in turn, is formed from a shaft 3 and a radial extension 4 that extends in the approximate radial direction integrally with the shaft 3. Seat tube bracket 2 is fixed to a bicycle so that the circular opening aligns with the bicycle bottom bracket assembly.

A front derailleur bracket 5 is attached to the outer end of the radial extension 4. As shown in Figure 2, the front derailleur bracket 5 is provided with a four-piece linking mechanism 6, and a chain guide plate 7 is attached to the movable portion of the four-piece linking mechanism 6. The chain guide plate 7 is able to move back and forth in the axial direction of the shaft 3.

The inner cable 9 of a derailleur cable used to operate the derailleur is fastened to the link portion 8 of the chain guide plate 7 by being squeezed under a high pressure between the linking portion 8 and the cable fixing plate 11. The cable fixing plate 11 is securely tightened to the linking portion 8 by a bolt 12.

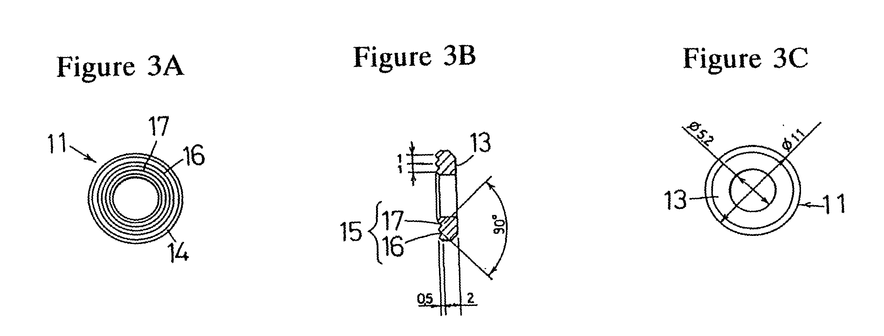

A first embodiment of the cable fixing plate 11 according to the present invention is illustrated in Figures 3A, 3B, and 3C. In this embodiment, the cable fixing plate 11 is an annular disk formed in the shape of a circular ring. One side, the bolt side end face 13, is formed substantially flat. The other side, the cable side end face 14, has a bumpy pattern 15. This bumpy pattern 15 consists oftwo concentric, circular grooves 16 and 17. The intersecting angle of the inclined surfaces that make up each of the circular grooves 16 and 17 (the angle in a cross section at a right angle to the cable side end face 14, including the radius) is roughly 80 to 100 degrees. Preferably, this angle should be about 90 degrees. The cable fixing plate 11 is made from an aluminum alloy in order to lower its weight.

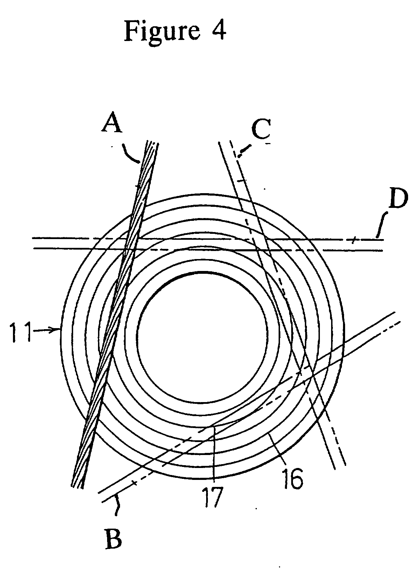

When viewed from its center, the bumpy pattern 15 extends in the form of radially widening concentric waves in the radial direction from the center of the cable fixing plate 11. In the course of fastening the cable fixing plate 11 to the linking portion 8 by the bolt 12, the angular position of the cable fixing plate 11 with respect to the linking portion 8, that is, the angular position of the cable fixing plate 11 around the center, need not be fixed. For instance, as shown by the positions A, B, and C in Figure 4, the relative rotational angle around the center of the inner cable 9 and the cable fixing plate 11 is variable. However, despite the variability of this relative rotational angle position, the relation of the inner cable 9 to the grooves 16 and 17 does not vary. Because of this variability, the tightening force of the inner cable 9 is constant, which facilitates quality control.

The continuous, sharp (about 90 degrees), circular protrusions bite into the inner cable 9. Due to a wedge effect, the greater the tension on the inner cable 9, the greater is this biting force or engagement force. The intersection angle of the circular groove 16 and the inner cable 9 changes variously with the position in the lengthwise direction of the inner cable 9. For example, the inner cable 9 at the position D intersects the circular groove 16 at a relatively large intersection angle, and intersects the circular groove 17 at a relatively small intersection angle. The wedge effect is displayed more effectively since the inner cable 9 thus intersects the circular grooves 16 and 17 in a complex fashion. A protrusion having an angle of about 90 degrees does not buckle as protrusions of greater angles are prone to do, and also has good engagement, unlike protrusions having smaller angles. A fixing plate with such protrusions thus combines strength similar to that of a flat planar plate, with a high level of grip.

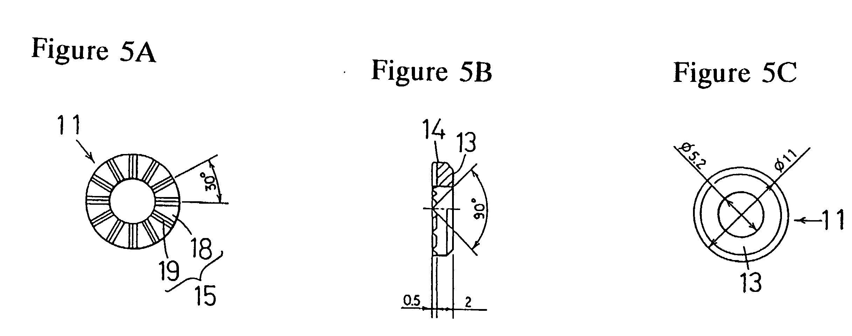

A second embodiment of the cable fixing plate 11 of the present invention is illustrated in Figures 5A, 5B, and 5C. As with the first embodiment, the cable fixing plate 11 is an annular disk formed in the shape of a circular ring. One side, the bolt side end face 13, is formed substantially flat. The other side, the cable side end face 14, has a bumpy pattern 15. This bumpy pattern 15 consists of numerous straight grooves 18 and straight protrusions 19 in the radial direction. The intersecting angle of the inclined surfaces that make up each of the straight protrusions 19 (the angle in a cross section at a right angle to the radius) should be greater than 80 and less than 100 degrees. Preferably, this angle should be about 90 degrees. The cable fixing plate 11 is made from an aluminum alloy in order to lower its weight.

In this embodiment, the bumpy pattern 15 is in the form of regular, continuous waves in the rotary direction on a circle that shares its center with the cable fixing plate 11. In the course of fastening the cable fixing plate 11 to the linking portion 8 by the bolt 12, the angular position of the cable fixing plate 11 with respect to the linking portion 8, that is, the angular position of the cable fixing plate 11 around the center, need not be fixed. The relative rotational angle around the center of the inner cable 9 and the cable fixing plate 11 is variable, but despite this variability of the relative rotational angle position, the relation of the inner cable 9 to the straight grooves 18 and straight protrusions 19 does not vary. Because of this variability, the tightening force of the inner cable 9 is constant, which facilitates quality control.

The continuous, sharp (about 90 degrees), linear protrusions bite into the inner cable 9. Due to a wedge effect, the greater the tension on the inner cable 9, the greater this biting force or engagement force. The intersection angle of the plurality of straight protrusions 19 and the inner cable 9 changes variously with the position in the lengthwise direction of the inner cable 9. The wedge effect is displayed more effectively since the inner cable 9 thus intersects the straight protrusions 19 in a complex fashion.

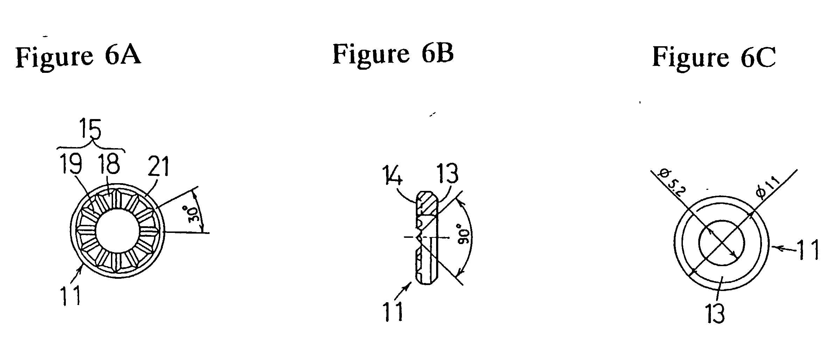

A third embodiment of the cable fixing plate 11 of the present invention is illustrated in Figures 6A, 6B, and 6C. As in the other embodiments, the cable fixing plate 11 is an annular disk formed in the shape of a circular ring. One side, the bolt side end face 13, is formed substantially flat. The other side, the cable side end face 14, has a bumpy pattern 15. This bumpy pattern 15 consists of numerous straight grooves 18 and straight protrusions 19 in the radial direction. The intersecting angle of the inclined surfaces that make up each of the straight protrusions 19 (the angle in a cross section at a right angle to the radius) should be greater than 80 and less than 100 degrees. Preferably, this angle should be about 90 degrees. The cable fixing plate 11 is made from an aluminum alloy in order to lower its weight.

The bumpy pattern 15 in this embodiment also is in the form of regular, continuous waves in the rotary direction on a circle that shares its center with the cable fixing plate 11. However, this embodiment differs from the second embodiment in that a ring protrusion 21 is provided on the outer peripheral side such that it is in contact with the straight protrusions 19. The second and third embodiments are nearly the same in terms of their action and effect.

A cable fixing plate according to the first embodiment was constructed from an aluminum alloy and tested. The aluminum alloy cable fixing plate thus produced had a thickness of 2 mm, a groove depth of 0.5 mm, a diameter of 11 mm, and a center hole diameter of 5.2 mm. The protrusion cross sectional angle was 90 degrees. A cable was fastened to a linking portion of a front derailleur using this cable fixing plate, and a test was conducted. The plate was tightened five times at a torque of 100 kg·cm, and the cable did not break. The static tensile strength was sufficient when the tightening torque was 50 kg•cm, and there was no inner cable slippage. Pulling at 108 kgf and 116 kgf caused the outer casing to buckle. Durability during repeated use was checked, and no abnormalities were noted after 10,000 cable strokes. Similar results were obtained with a cable fixing plate constructed in accordance with second embodiment.

If we let the coefficient of friction between the surface of the aluminum alloy and the material of the plating layer of the cable surface (such as tin, zinc, or stainless steel) be *µ*, then the angle θ/2 (where θ is the angle of the inclined surface) at which the maximum friction force is obtained between the cable and the inclined surface of the protrusion is expressed as *µ* = tan{(½)θ}. In most such cases, the coefficient of friction is close to 1. In this case, the angle θ is 90 degrees. When this angle is selected, a stronger resistance is displayed at the outset when tension is applied to the cable. Also, at this angle, even if the cable should begin to slip, a wedge effect of greater resistance will quickly and sufficiently be displayed, and if the angle is about 90 degrees, the protrusion portion will be resistant to buckling, and the shear area (the shear area at the middle height of the protrusion peak) will be neither too large nor too small, so the protrusion will be resistant to shear. If the coefficient of friction is a little smaller, the angle can be set at 80 degrees. If the coefficient of friction is a little larger, the angle can be set at 100 degrees.

While the above is a description of various embodiments of the present invention, further modifications may be employed without departing from the spirit and scope of the present invention. Thus, the scope of the invention should not be limited by the specific structures disclosed. Instead, the true scope of the invention should be determined by the following claims.

## Claims

1. A bicycle comprising a bicycle cable fixing plate (11) fixing a bicycle control cable (9) to a surface so that the cable (9) is disposed between the fixing plate (11) and the surface, the fixing plate (11) comprising an annular plate (11) having an uneven surface (14) **characterised in that** the uneven surface (14) comprises an undulating surface (15) comprising a plurality of protrusions (19,21) disposed about the annular plate (11) for contacting the cable (9), the intersecting angle of the inclined surfaces that make up each of the protrusions being between approximately 80° and approximately 100°.

2. The bicycle according to claim 1 wherein the protrusions (19,21) have a cross-sectional angle of about 90°.

3. The bicycle according to either claim 1 or claim 12 wherein the protrusions (19,21) are substantially straight.

4. The bicycle according to any of claims 1 to 3 wherein the undulating surface (15) undulates in a radial direction.

5. The bicycle according to claim 4 wherein the undulating surface (15) is formed from a plurality of concentric circular grooves (16,17).

6. The bicycle according to claim 5, wherein the grooves (16,17) alternate with the protrusions (19,21).

7. The bicycle according to any of claims 1 to 3 wherein the undulating surface (15) undulates in a rotary direction.

8. The bicycle according to claim 7 wherein the undulating surface (15) is formed from a plurality of radially extending grooves (18).

9. The bicycle according to claim 8 wherein the grooves (18) are substantially straight.

10. The bicycle according to any of claims 1 to 9 further comprising a peripheral protrusion (21) extending along the periphery of the annular plate (11).

11. The bicycle according to any of claims 1 to 10 wherein the annular plate (11) comprises aluminium, an aluminium alloy or another light alloy.

12. The bicycle according to any of claims 1 to 11 wherein the annular plate (11) has a ring shape.

## Patentansprüche

1. Ein Fahrrad, bestehend aus einer Fahrradkabelbefestigungsplatte (11), die das Fahrrad-Steuerkabel (9) an einer Oberfläche befestigt, so daß sich das Kabel (9) zwischen der Befestigungsplatte (11) und der Oberfläche befindet, wobei die Befestigungsplatte (11) eine ringförmige Platte (11) mit einer unebenen Oberfläche (14) umfaßt, **dadurch gekennzeichnet**, daß die unebene Oberfläche (14) eine wellenförmige Oberfläche (15) umfaßt, die eine Vielzahl von um die ringförmige Platte (11) befindlichen Vorsprüngen (19, 21) zur Berührung mit dem Kabel (9) umfaßt, wobei der Schnittwinkel der geneigten Oberflächen, die jeweils einen Vorsprung ausmachen, zwischen ungefähr 80 ° und ungefähr 100 ° liegt.

2. Fahrrad gemäß Anspruch 1, wobei die Vorsprünge (19,21) einen Querschnittswinkel von etwa 90 ° aufweisen.

3. Fahrrad gemäß Anspruch 1 oder Anspruch 2, wobei die Vorsprünge (19, 21) im wesentlichen gerade sind.

4. Fahrrad gemäß einem der Ansprüche 1 bis 3, wobei die wellenförmige Oberfläche (15) sich in radialer Richtung wellt.

5. Fahrrad gemäß Anspruch 4, wobei die wellenförmige Oberfläche (15) aus einer Vielzahl von konzentrischen, kreisförmigen Rillen (16, 17) geformt ist.

6. Fahrrad gemäß Anspruch 5, wobei die Rillen (16, 17) sich regelmäßig mit den Vorsprüngen (19, 21) abwechseln.

7. Fahrrad gemäß einem der Ansprüche 1 bis 3, wobei die wellenförmige Oberfläche (15) sich in einer Rotationsrichtung wellt.

8. Fahrrad gemäß Anspruch 7, wobei die wellenförmige Oberfläche (15) aus einer Vielzahl von sich radial erstreckenden Rillen (18) geformt ist.

9. Fahrrad gemäß Anspruch 8, wobei die Rillen (18) im wesentlichen gerade sind.

10. Fahrrad gemäß einem der Ansprüche 1 bis 9, weiter bestehend aus einem Umfangs-Vorsprung (21), der sich entlang dem Umfang der ringförmigen Platte (11) erstreckt.

11. Fahrrad gemäß einem der Ansprüche 1 bis 10, wobei die ringförmige Platte (11) Aluminium, eine Aluminiumlegierung oder eine andere leichte Legierung umfaßt.

12. Fahrrad gemäß einem der Ansprüche 1 bis 11, wobei die ringförmige Platte (11) eine Ring-Form aufweist.

## Revendications

1. Une bicyclette comprenant une plaque de fixation de câble de bicyclette (11) fixant un câble de commande de bicyclette (9) à une surface de sorte que le câble (9) est disposé entre la plaque de fixation (11) et la surface, la plaque de fixation (11) comprenant une plaque annulaire (11) présentant une surface inégale (14) **caractérisée en ce que** la surface inégale (14) comprend une surface onduleuse (15) comprenant une pluralité de saillies (19, 21) disposées autour de la plaque annulaire (11) et destinées à entrer en contact avec le câble (9), l'angle d'intersection des surfaces inclinées qui constituent chacune des saillies étant entre approximativement 80° et approximativement 100°.

2. La bicyclette selon la revendication 1 dans laquelle les saillies (19, 21) présentent un angle en coupe transversale d'environ 90°.

3. La bicyclette selon soit la revendication 1 soit la revendication 2 dans laquelle les saillies (19, 21) sont sensiblement droites.

4. La bicyclette selon n'importe lesquelles des revendications 1 à 3 dans laquelle la surface onduleuse (15) ondule dans un sens radial.

5. La bicyclette selon la revendication 4 dans laquelle la surface onduleuse (15) est formée à partir d'une pluralité de sillons circulaires concentriques (16, 17).

6. La bicyclette selon la revendication 5, dans laquelle les sillons (16, 17) et les saillies (19, 21) se succèdent en alternance.

7. La bicyclette selon n'importe lesquelles des revendications 1 à 3 dans laquelle la surface onduleuse (15) ondule dans un sens rotatoire.

8. La bicyclette selon la revendication 7 dans laquelle la surface onduleuse (15) est formée à partir d'une pluralité de sillons s'étendant de façon radiale (18).

9. La bicyclette selon la revendication 8 dans laquelle les sillons (18) sont sensiblement droits.

10. La bicyclette selon n'importe lesquelles des revendications 1 à 9 comprenant en outre une saillie périphérique (21) s'étendant le long de la périphérie de la plaque annulaire (11).

11. La bicyclette selon n'importe lesquelles des revendications 1 à 10 dans laquelle la plaque annulaire (11) comprend de l'aluminium, un alliage d'aluminium ou un autre alliage léger.

12. La bicyclette selon n'importe lesquelles des revendications 1 à 11 dans laquelle la plaque annulaire (11) a la forme d'un anneau.
